Europäisches Patentamt

European Patent Office

Office européen des brevets

(11) Veröffentlichungsnummer: **0 298 394**
**A2**

(12) **EUROPÄISCHE PATENTANMELDUNG**

(21) Anmeldenummer: 88110553.0

(22) Anmeldetag: 01.07.88

(51) Int. Cl.⁴: **H04N 5/21**

(30) Priorität: 04.07.87 DE 3722170

(43) Veröffentlichungstag der Anmeldung:
**11.01.89 Patentblatt 89/02**

(84) Benannte Vertragsstaaten:
**AT BE CH DE ES FR GB GR IT LI LU NL SE**

(71) Anmelder: **Deutsche Thomson-Brandt GmbH**
**Postfach 2060**
**D-7730 Villingen-Schwenningen(DE)**

(72) Erfinder: **Geiger, Erich, Dipl.-Ing.**
**Panoramaweg 13**
**D-7731 Unterkirnach(DE)**
Erfinder: **Guillon, Jean-Claude**
**10-Rue de Provence Gerstheim**
**F-67150 Erstein(FR)**
Erfinder: **Rufray, Jean Claude**
**Hans-Thoma Strasse 6**
**D-7739 Brigachtal(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Verfahren und Vorrichtung zur Verminderung der Sichtbarkeit der Zeilenstruktur eines Fernsehbildes.**

(57) Verfahren und Vorrichtung zur Verminderung der Sichtbarkeit der Zeilenstruktur eines Fernsehbildes.

Bei normalem Betrachtungsabstand wird die Zeilenstruktur eines Fernsehbildes üblicher Norm nicht störend wahrgenommen. Wird jedoch das Fernsehbild gedehnt, so wird die Zeilenstruktur sichtbar.

Statt einer Interpolation wird das dargestellte Bild aus einer höheren Zeilenzahl zusammengesetzt. Vorzugsweise werden jeweils zwei aufeinanderfolgende Zeilen mit dem gleichen Bildinhalt versorgt.

Das Verfahren ist bei Fernsehgeräten anwendbar, bei denen zur bildschirmformatfüllenden Darstellung von Bildern, die ein anderes Format als das des Fernsehbildschirms aufweisen, die Bilder gedehnt werden.

## Verfahren und Vorrichtung zur Verminderung der Sichtbarkeit der Zeilenstruktur eines Fernsehbildes

Die Erfindung betrifft ein Verfahren zur Verminderung der Sichtbarkeit der Zeilenstruktur eines Fernsehbildes nach dem Oberbegriff des Anspruchs 1.

Bei normalem Betrachtungsabstand wird die Zeilenstruktur eines Fernsehbildes nicht störend wahrgenommen. Durch technische Maßnahmen einer Bildausschnittvergrößerung, die durch Amplitudenvergrößerung der Zeilen- und Bildablenksignale erfolgt, wird jedoch die Zahl der auf dem Bildschirm sichtbaren Zeilen verkleinert und der gegenseitige Abstand vergrößert, so daß die Zeilenstruktur bei dieser Betriebsart erkennbar wird.

Der Erfindung liegt die Aufgabe zugrunde, ein Verfahren zur Verminderung der Sichtbarkeit der Zeilenstruktur eines gedehnten, vergrößerten Fernsehbildes zu schaffen, das wenigstens die gleiche Zeilenstruktur erkennen läßt, wie ein unter dem gleichen Betrachtungsabstand betrachtetes unvergrößertes Fernsehbild.

Diese Aufgabe wird bei einem Verfahren nach dem Oberbegriff des Anspruchs 1 durch die im kennzeichnenden Teil angegebenen Merkmale gelöst.

Vorzugsweise wird die Zeilenzahl des dargestellten Bildes verdoppelt und zwei aufeinanderfolgende Zeilen werden mit dem gleichen Bildinhalt versorgt. Diese Maßnahme ist in der Durchführung besonders übersichtlich und erlaubt eine Dehnung des Fernsehbildes in vertikaler Richtung auf das Doppelte, ehe die Zeilenstruktur als störend wahrgenommen wird.

Eine vorteilhafte Maßnahme zur Durchführung besteht darin, den Bildinhalt jeder Zeile während der Übertragung oder Widergabe aus einem Speicher einmal zwischenzuspeichern und während der Zwischenspeicherung den Bildinhalt der folgenden Zeile zweimal darzustellen. Dieses Verfahren führt zu einer nicht wahrnehmbaren Verzögerung und kommt schaltungstechnisch mit geringen Speicherkapazitäten aus.

Die Erfindung betrifft ferner eine Schaltungsanordnung zur Verminderung der Sichtbarkeit der Zeilenstruktur eines Fernsehbildes.

Diesbezüglich liegt ihr die Aufgabe zugrunde, eine Schaltungsanordnung zu schaffen, die bei möglichst geringem schaltungstechnischen Aufwand einen Bildeindruck erzielen, der dem eines Fernsehbildes üblichen Zeilennorm entspricht.

Diese Aufgabe wird bei einer Schaltungsanordnung nach dem Oberbegriff des Anspruchs 4 durch die im kennzeichnenden Teil angegebenen Merkmale gelöst. Zur Erreichung einer höheren Zeilenzahl ist es lediglich notwendig, die Zeilenablenkschaltung zu dimensionieren oder beide Dimensionierungen vorzunehmen und die Betriebsart umschaltbar zu machen. Zur Versorgung benachbarter Zeilen mit dem gleichen Bildinhalt dient eine Speicherschaltung, die wenigstens den Inhalt einer Bildzeile, vorzugsweise jedoch von zwei Bildzeilen umfaßt. Der in der Speicherschaltung befindliche Bildinhalt kann dann mehrmals hintereinander ausgelesen werden.

Besonders zweckmäßig ist es, zwei Schreiblesespeicher vorzusehen, deren Dateneingänge mit einer ankommenden Bildsignalleitung und darin Datenausgänge über einen Umschalter mit einer abgehenden Bildsignaleitung verbunden sind. Diese Schreiblesespeicher werden abwechselnd in die Schreib- und in die Lesebetriebsart gesteuert und zwar so, daß abwech selnd der eine Schreiblesespeicher der Lesebetriebsart und der andere in der Schreibbetriebsart ist und anschließend der eine in der Schreibbetriebsart und der andere in der Lesebetriebsart ist.

Weiterbildungen und vorteilhafte Ausführungsformen der Erfindung ergeben sich aus den Ansprüchen, der Beschreibung und der Zeichnung, die ein Ausführungsbeispiel des Gegenstandes der Erfindung veranschaulicht.

In der Zeichnung zeigen:

Fig. 1 ein Diagramm zur Verdeutlichung der Übertragungs-, Speicher- und Lesevorgänge bei Durchführung des Verfahrens nach einer Ausgestaltung der Erfindung,

Fig. 2 ein Blockschaltbild der Schaltungsanordnung nach einer Ausführungsform der Erfindung.

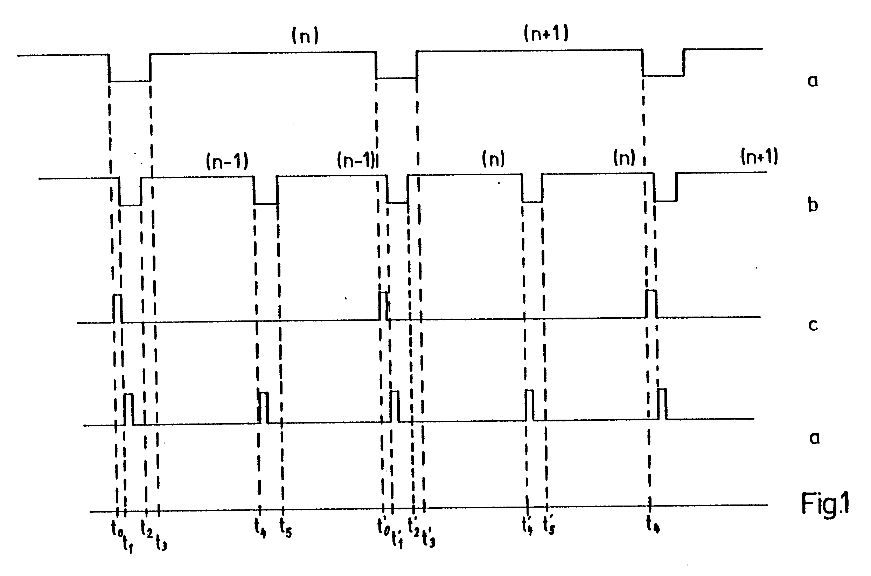

Fig. 1a gibt die zeitliche Aufteilung der übertragenen oder wiedergegebenen Signale für aufeinanderfolgende Zeilen eines Fernsehbildes wieder. Im Zeitpunkt $t_0$ der Betrachtung beginnt ein Zeilenrücklaufimpuls, der im Zeitpunkt $t_3$ beendet ist. Vom Zeitpunkt $t_3$ bis zum Zeitpunkt $t_0'$ wird eine Zeile mit der Ordnungszahl n übertragen. Diese Zeile wird bei direkter Darstellung auf dem Bildschirm unmittelbar übernommen. Im Zeitpunkt $t_0'$ beginnt der Zeilenrücklaufimpuls für eine nachfolgende Zeile mit der Ordnungszahl n + 1. Der Zeilenrücklaufimpuls ist im Zeitpunkt $t_3'$ beendet und die Übertragung des Bildinhalts der Zeile n + 1 erfolgt vom Zeitpunkt $t_3'$ bis zum Zeitpunkt $t_0''$.

Für die nachfolgenden Zeilen n + 2 u.s.w. wiederholen sich die beschriebenen Vorgänge entsprechend. Wie die Darstellung in Fig. 1c zeigt, wird im Zeitpunkt $t_0$ auch ein Rücksetzimpuls erzeugt, der einen Speicher zurücksetzt und im Zeitpunkt $t_1$ werden die Bildsignale der Zeile n in diesen Speicher eingeschrieben. Im Zeitpunkt $t_0'$ wird dann ein zweiter Speicher zurückgesetzt und zwischen dem Zeitpunkt $t_2'$ und $t_0'$ der Bildinhalt der Zeile mit der Ordnungszahl $n+1$ in diesen Speicher eingeschrieben. Im Zeitpunkt $t_0'$ wird wieder der erste Speicher zurückgesetzt und in diesen der Bildinhalt der Zeile mit der Ordnungszahl $n+2$ eingeschrieben. Dieser Vorgang wiederholt sich abwechselnd bei den folgenden Zeilen, wobei der Inhalt der geradzahligen Zeilen immer in den ersten Speicher und der Inhalt der ungeradzahligen Zeilen immer in den zweiten Speicher eingeschrieben wird.

Die Darstellung der gespeicherten Bildinhalte ergibt sich aus Fig. 1b und Fig. 1d. Zwischen den Zeitpunkten $t_1$ und $t_1'$ wird der Bildinhalt der vorhergehenden Zeile $n-1$ zweimal ausgelesen und in zwei Zeilen dargestellt. Dies geschieht nach einem im Zeitpunkt $t_1$ beginnenden und im Zeitpunkt $t_2$ endenden Zeilenimpuls und dauert und vom Zeitpunkt $t_2$ bis zum Zeitpunkt $t_4$. Dieser Vorgang wiederholt sich nun nach einem zweiten, im Zeitraum $t_4$ beginnenden und im Zeitpunkt $t_5$ endenden Zeilenimpuls ein zweites Mal und dauert vom Zeitpunkt $t_4$ bis zum Zeitpunkt $t_1'$. Der entsprechende, auf Auslesen gesteuerte Zähler wird zur Durchführung dieser Maßnahme in den Zeitpunkten $t_1$ und $t_4$ zurückgesetzt, wie Fig. 1d zeigt. Zwischen den Zeitpunkten $t_1'$ und $t_1''$ wird nun derjenige Speicher, in den vorher der Bildinhalt eingeschrieben wurde, in die Betriebsart "Auslesen" gesteuert und der eben beschriebene Vorgang wiederholt sich für die Zeilen $n$ nun bei diesem Speicher zwischen den Zeitpunkten $t_1'$ und $t_1''$.

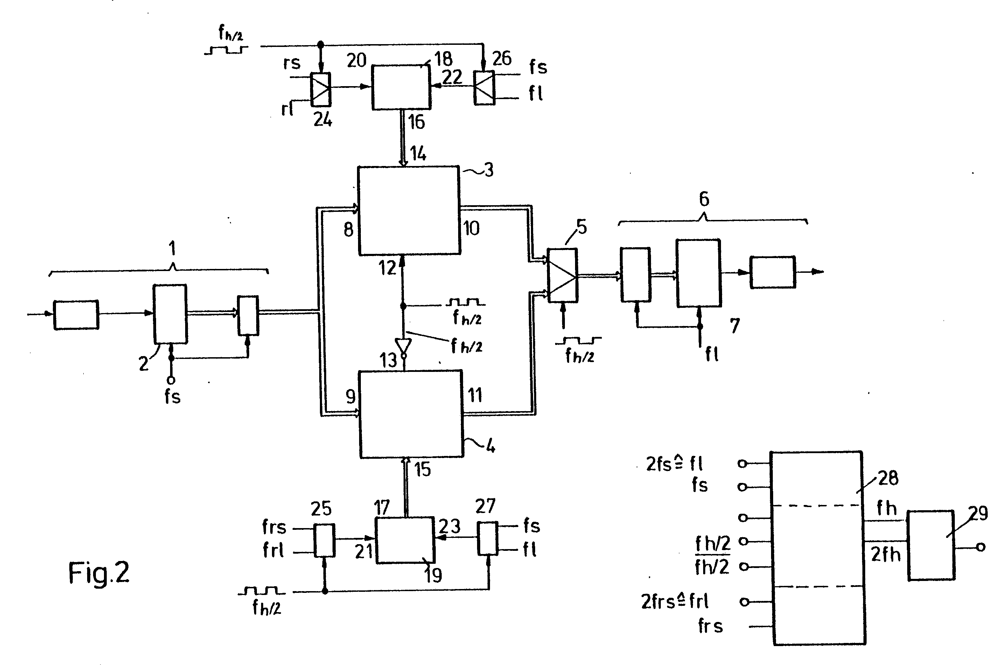

Fig. 2 zeigt ein Blockschaltbild einer erfindungsgemäßen Ausführungsform. Ein ankommender Signalweg 1 mit einem Analog/Digital-Wandler 2 wird auf einen ersten Schreiblesespeicher 3 und einen zweiten Schreiblesespeicher 4 verzweigt und anschließend über einen Multiplexer 5 wieder zu einem abgehenden Signalweg 6 mit einem Digital/Analog-Wandler 7 zusammengeführt. Die Schreiblesespeicher 3 und 4 verfügen über Dateneingänge 8 und 9, Datenausgänge 10 und 11, Schreiblesesteuereingänge 12 und 13 sowie Adresseneingänge 14 und 15. Die Adresseneingänge 14 und 15 der Schreiblesespeicher 3 und 4 sind mit Zählausgängen 16 und 17 von Adressenzählern 18 und 19 verbunden, die ihrerseits Rücksetzeingänge 20 und 21 sowie Takteingänge 22 und 23 aufweisen. Die Rücksetzeingänge 20 und 21 werden über Multiplexer 24 und 25 und die Takteingänge 22 und 23 über Multiplexer 26 und 27 von einer Steuerschaltung 28 angesteuert. Mit dieser Steuerschaltung 28 ist noch eine Zeilenablenkschaltung 29 verbunden. Der Übersichtlichkeit wegen sind die einzelnen Steuerleitungen nicht eingezeichnet sondern nur die Signale an den entsprechenden Steuereingangs- bzw. ausgangsklemmen angegeben. Bei den Steuersignalen handelt es sich um Schaltsignale $f_{h/2}$ und $f_{h/2}'$, also das inverse Signal zu $f_{h/2}$. Diese Signale sind symmetrische Schaltsignale und ändern ihre Zustände nach jeder Zeilenperiode des übertragenen oder wiedergegebenen Bildsignals. Die Schaltsignale dienen zur wechselweisen Umschaltung der Schreiblesespeicher 3 und 4 über die Steuereingänge 12 und 13 von der Betriebsart "Schreiben" auf die Betriebsart "Lesen" und umgekehrt. Außerdem wird der Demultiplexer 5 angesteuert, so daß während jeder Zeilenperiode einmal abwechselnd der Datenausgang 10 zweimal und der Datenausgang 11 zweimal auf den abgehenden Signalweg 6 geschaltet wird. Schließlich werden noch die Multiplexer 24, 25, 26 und 27 mit diesen Schaltsignalen geschaltet.

Die Steuersignale $f_{rl}$ und $f_{rs}$ sind Rücksetzsignale für die Zähler 18 und 19 und entsprechen den in Fig. 1c und d im Zeitpunkt $t_0$ bzw. $t_1$ sowie in den entsprechenden nachfolgenden Zeitpunkten dargestellten Rücksetzsignalen.

Die Frequenz des Rücksetzsignals $f_{rs}$ entspricht betragsmäßig der Zeilenfrequenz des übertragenen oder wiedergegebenen Bildes und die Frequenz des Signals $f_{rl}$ entspricht betragsmäßig der Zeilenfrequenz des dargestellten Bildes. In diesem Fall ist die Frequenz des Signals $f_{rl}$ doppelt so groß wie die Frequenz des Signals $f_{rs}$. Schließlich werden noch Taktsignale erzeugt, die den Zählern 18 und 19 über die Multiplexer 26 und 27 den Takteingängen 22 und 23 zugeführt werden. Es handelt sich um Taktsignale $f_s$ für die Betriebsart "Schreiben" und Taktsignale $f_l$ für die Betriebsart "Lesen". Die Frequenz der Taktsignale entspricht der Anzahl der Bildpunkte jeder Zeile multipliziert mit der jeweiligen Zeilenfrequenz. Im vorliegenden Fall ist deshalb die Taktfrequenz des Signals $f_l$ doppelt so groß wie diejenige des Signals $f_s$.

Die Bildsignale erreichen über den ankommenden Signalweg 1 in digitaler Form die Dateneingänge 8 und 9 der Schreiblesespeicher 3 und 4. Es wird angenommen, daß im Zeitpunkt $t_0$ der Schreiblesespeicher 3 in der Betriebsart "Schreiben" und der Speicher 4 in der Betriebsart "Lesen" ist. Dann ist der Multiplexer 24 so gesteuert, daß er Rücksetzsignale $f_{rs}$ zum Rücksetzeingang 20 durchschaltet und der Multiplexer 25 so gesteuert, daß er Rücksetzsignale $f_{rl}$ zum Eingang 21 durchschaltet. Der Multiplexer 26 ist ferner so geschaltet, daß er Taktsignale $f_s$ zum Takteingang 22 durchschaltet und der Multiplexer 27 schaltet Taktsignale $f_l$ zum Takteingang 23 durch. Anschließend werden die Bilddaten der Zeile $n$ in den Schreiblesespeicher 3 eingeschrieben, indem alle benötigten Speicherplätze nacheinander adressiert werden. Im Schreiblesespeicher 4 waren bereits die Bilddaten der vorhergehenden Zeile $n-1$ eingeschrieben worden und diese werden nun im Zeit-

punkt $t_1$ ausgelesen und über dem Demultiplexer 5 auf den abgehende Signalweg 6 gegeben. In dem zur Verfügung stehenden Zeitraum zwischen $t_1$ und $t_0'$ werden die Speicherplätze im Schreiblesespeicher 4 in zwei übereinstimmenden Zyklen adressiert, die Bildsignale also zweimal ausgelesen. Anschließend werden die Schreiblesespeicher 3 und 4 in die jeweils andere Betriebsart versetzt, also aus dem Schreiblesespeicher 3 werden die zuvor gespeicherten Bildsignale ausgelesen und in den Schreiblesespeicher 4 die Bilddaten der nun übertragenen oder wiedergegebenen Zeile eingeschrieben. Die zuvor gespeicherten Bilddaten gehen dabei verloren. Um den Ausgang 10 des Schreiblesespeichers 3 auf den abgehenden Signalweg 6 zu schalten, wird der Demultiplexer 5 umgeschaltet. Dieser beschriebene Vorgang wiederholt sich nun nach jeder Zeilenperiode des übertragenen oder wiedergegebenen Bildsignals.

**Ansprüche**

1. Verfahren zur Verminderung der Sichtbarkeit der Zeilenstruktur eines gedehnten, vergrößerten Fernsehbildes, <u>dadurch</u> <u>gekennzeichnet</u>, daß das dargestellte Bild aus einer höheren Zeilenzahl zusammengesetzt wird als das übertragene oder gespeicherte Bild und daß die zusätzlichen Zeilen jeweils mit dem gleichen Bildinhalt einer der benachbarten Zeilen versorgt werden.

2. Verfahren nach Anspruch 1, <u>dadurch ge-</u> <u>kennzeichnet</u>, daß die Zeilenzahl des dargestellten Bildes verdoppelt wird und daß jeweils zwei aufeinanderfolgende Zeilen mit dem gleichen Bildinhalt versorgt werden.

3. Verfahren nach Anspruch 2, <u>dadurch ge-</u> <u>kennzeichnet</u>, daß der Bildinhalt jeder Zeile während der Übertragung oder Wiedergabe aus einem Speicher einmal zwischengespeichert wird und während der Zwischenspeicherung des Bildinhalts der folgenden Zeile zweimal dargestellt wird.

4. Schaltungsanordnung zur Verminderung der Sichtbarkeit der Zeilenstruktur eines Fernsehbildes, <u>dadurch gekennzeichnet</u>, daß eine Zeilenablenkschaltung (29) mit einer höheren Zeilenfrequenz als der Zeilenfrequenz der über tragenen oder gespeicherten Bilder und eine Speicherschaltung (3,4) für den Bildinhalt wenigstens einer Zeile vorgesehen sind und daß die Speicherschaltung (3,4) mit einer Steuerschaltungsanordnung (18,19,24,25,26,27) verbunden ist, mittels der der Bildinhalt einer übertragenen oder wiedergegebenen Zeile einschreibbar und mehrmals auslesbar ist.

5. Schaltungsanordnung nach Anspruch 4, <u>dadurch gekennzeichnet</u>, daß die Zeilenablenkschaltung (29) für die doppelte Zeilenfrequenz der übertragenen oder gespeicherten Bilder bemessen ist.

6. Schaltungsanordnung nach Anspruch 4 oder 5, <u>dadurch gekennzeichnet</u>, daß die Speicherschaltung zwei Schreib-Lese-Speicher (3,4) umfaßt, deren Dateneingänge (8,9) mit einer ankommenden Bildsignalleitung (1) und deren Datenausgänge (10,11) über einen Umschalter (5) mit einer abgehenden Bildsignalleitung (6) verbunden sind und daß die Schreib-Lese-Speicher (3,4) über ihre Schreib-Lese-Steuereingänge (12,13) wechselweise invers angesteuert sind.

7. Schaltungsanordnung nach einem oder mehreren der Ansprüche 4 bis 6, <u>dadurch gekennzeichnet</u>, daß die Schreib-Lese-Steuereingänge (12,13) mit einem Steuersignal der halben Zeilenfrequenz ($f_{h/2}$) der übertragenen oder gespeicherten Bilder angesteuert sind.

8. Schaltungsanordnung nach einem oder mehreren der Ansprüche 4 bis 7, <u>dadurch gekennzeichnet</u>, daß die Adresseneingänge (14,15) der Schreib-Lese-Speicher (3,4) mit den Ausgängen (16,17) von Zählern (18,19) verbunden sind und die Zähler (18,19) in der Schreibbetriebsart der Schreib-Lese-Speicher (3,4) mit einem der Anzahl der Bildpunkte je Zeile entsprechenden Vielfachen der Zeilenfrequenz der übertragenen oder wiedergegebenen Bilder und in der Lesebetriebsart mit einem der Anzahl der Bildpunkte je Zeile entsprechenden Vielfachen der Zeilenfrequenz der übertragenen oder wiedergegebenen Bilder multipliziert, mit dem Verhältnis der dargestellten zu den übertragenen oder wiedergegebenen Zeilen getaktet sind.

Fig.1

EP 0 298 394 A2

**Fig.2**

$f_{h/2}$

rs
20
18
26
fs
rl
24
22
fl

16

14

3

8
10

1

12

2

$f_{h/2}$

fs

$f_{h/2}$

13
$f_{h/2}$

9
11

4

5

6

7

$f_{h/2}$

fl

15

25
17
27
frs
23
fs
frl
21
fl
19

$f_{h/2}$

$2fs \hat{=} fl$
fs
28
fh
$\frac{fh/2}{fh/2}$
2fh
29
$2frs \hat{=} frl$
frs

H87/018-2
H87/017-2